Europäisches Patentamt

European Patent Office

Office européen des brevets

(19)

(11) Veröffentlichungsnummer: **0 022 570**
**A1**

(12) # EUROPÄISCHE PATENTANMELDUNG

(21) Anmeldenummer: **80104003.1**

(22) Anmeldetag: **11.07.80**

(51) Int. Cl.³: **A 22 C 13/02**

(30) Priorität: **13.07.79 DE 2928428**

(43) Veröffentlichungstag der Anmeldung: **21.01.81**
**Patentblatt 81/3**

(84) Benannte Vertragsstaaten: **BE CH DE FR GB IT LI NL SE**

(71) Anmelder: **Mayr, Alois, Treitschkestrasse 11,**
**D-8000 München 50 (DE)**

(72) Erfinder: **Mayr, Alois, Treitschkestrasse 11,**
**D-8000 München 50 (DE)**

(74) Vertreter: **Bermühler, Otto, Dipl.-Ing.,**
**Degenfeldstrasse 10, D-8000 München 40 (DE)**

(54) **Vorrichting zum Aufziehen von Därmen auf Füllrohre.**

(57) Vorrichtung zum Aufziehen von Därmen auf Füllrohre oder Mundstücke von Wurstfüllmaschinen, die eine mit dem Füllrohr (9, 9') der Wurstfüllmaschine (1) im Eingriff stehende bzw. bringbare, auf den Innenflanken (11, 12) mit einer flexiblen Schicht (10) z. B. aus Moosgummi oder Schaumkunststoff belegte und durch einen Motor (6, 6') angetriebene Keilscheibe (4) aufweist, deren lichte Weiten und Neigungswinkel so dimensioniert sind, daß der Außenumfang des Füllrohres (9, 9') in der Peripherie der horizontalen Mittelebene (13) bzw. im unmittelbar darunter liegenden Bereich die Innenflanken (11, 12) der Keilscheibe (4) berührt.

EP 0 022 570 A1

Alois Mayr, D-8000 München

Vorrichtung zum Aufziehen von Därmen
auf Füllrohre.

Die Erfindung betrifft eine Vorrichtung zum Aufziehen von Därmen auf Füllrohre oder Mundstücke von Wurstfüllmaschinen.

Bisher war es üblich die für die Wurstherstellung benötigten
Därme, die gebündelt als sogenannte "Hanks" oder in Form von
Spulen angeliefert wurden, nach vorherigem Einlegen in eine
Salzlake, in einer eigenen Vorrichtung mit Hilfe von zwei Walzen oder zwei Zahnrädern unter Dehnung oder Formung auf einen
Dorn aufzuziehen. Von diesem Dorn wurden die Därme in Form geraffter Wursthüllen auf das Füllrohr bzw. Mundstück der Wurstfüllmaschine übergeschoben.

- 2 -

- 2 -

Diese Arbeitsweise hat den Nachteil, daß das Aufziehen der Därme auf den Dorn einen zusätzlichen Arbeitsgang darstellt. Ferner ließ es sich nie vermeiden, daß entweder beim Aufziehen der Därme auf den Dorn durch die Walzen oder Zahnräder bzw. beim Überführen der Därme von dem Dorn auf das Füllrohr Überschiebungen im Darmbereich auftraten, die sich auf den Füllvorgang negativ auswirkten. Schließlich bedingte der Einsatz von jeweils zwei Walzen bzw. Zahnrädern zusätzliche Getriebeelemente.

Der vorliegenden Erfindung liegt nunmehr die Aufgabe zugrunde, eine einfache Vorrichtung zu schaffen, die es ermöglicht Därme einwandfrei und ohne Überschiebungen, direkt auf das Füllrohr einer Wurstfüllmaschine aufzuziehen, ohne daß diese in ihrem Raumbedarf eingeengt bzw. in ihrer Funktion gehindert wird.

Zur Lösung dieser Aufgabe wird eine mit dem Füllrohr im Eingriff stehende bzw. bringbare, auf der Innenseite mit einer flexiblen Schicht, z.B. aus Moosgummi oder Schaumkunststoff, belegte und durch einen Motor angetriebene Keilscheibe vorgeschlagen, deren lichte Weiten und Neigungswinkel so dimensioniert sind, daß der Außenumfang des Füllrohres in der Peripherie der horizontalen Mittelebene bzw. im unmittelbar darunter liegenden Bereich die Innenflanken der Keilscheibe berührt.

Es hat sich gezeigt, daß das Füllrohr der Wurstfüllmaschine beim Aufschieben des Darmes die Neigung hat zu vibrieren und daß sich in der Horizontalen gemessen Dimensionsunterschiede in dem auf-

- 3 -

geschobenen Darmmaterial zwischen der linken und der rechten Seite ergeben können, die den weiteren Aufschieb- bzw. Raff- vorgang ungünstig beeinflussen.

Um auch diesen Nachteil zu beseitigen, wird in weiterer Ausgestaltung des Gegenstandes der Erfindung der Vorschlag gemacht die Keilscheibe auf der Antriebswelle verschiebbar zu lagern und gegenüber dieser mittels im Querschnitt V-förmiger Dichtungsringe abzudichten und zu zentrieren.

Die Vorrichtung kann ein Element der Wurstfüllmaschine sein und von dieser angetrieben werden oder aber eine eigene Einrichtung darstellen, die an der Wurstfüllmaschine ggfs. trennbar angebaut ist. Auch eine Ausbildung als Handgerät ist im Rahmen der Erfindung denkbar.

Nachstehend wird die Erfindung an Hand der Zeichnung, in der ein Ausführungsbeispiel der erfindungsgemäßen Vorrichtung dargestellt ist, näher erläutert. Hierbei zeigt

Fig. 1   die an das Füllrohr einer Wurstfüllmaschine angesetzte Vorrichtung in der Vorderansicht,

Fig. 2   die gleiche Vorrichtung in der Seitenansicht,

Fig. 3   eine mit einem anderen Antrieb ausgestattete Vorrichtung in der Seitenansicht und

Fig. 4   einen Radialschnitt durch die Keilscheibe in vergrößertem Maßstab.

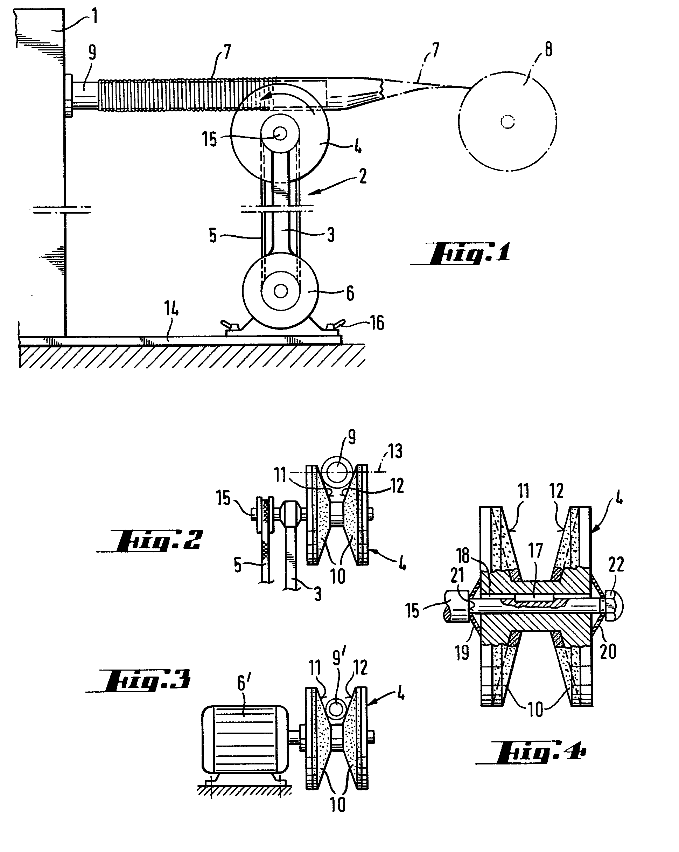

Wie aus den Fig. 1 und 2 zu entnehmen ist, besteht die an die Wurstfüllmaschine 1 angebaute Vorrichtung 2 aus einer an einem Träger 3 drehbar gelagerten Antriebswelle 15, auf der eine Keilscheibe 4 befestigt ist. Die Welle 15 wird über einen Riemen 5 oder eine Kette von einem Motor 6 angetrieben. Die Keilscheibe 4 zieht den Darm 7 von der Spule 8 ab und schiebt ihn unter Raffung auf das Füllrohr 9 der Wurstfüllmaschine 1 auf.

Die Keilscheibe 4 ist mit einem Überzug 10 aus Moosgummi oder Kunststoffschaum versehen und so gestaltet, daß ihre inneren Keilflanken 11, 12 die Peripherie des Füllrohres 9 im Bereich seiner horizontalen Mittelebene 13 berühren, was einen einwandfreien Raffeffekt des Darmes 7 ergibt.

Der Träger 3 kann an der Grundplatte 14 der Maschine mittels Schrauben 16 befestigt sein, um nach der Entfernung den anschliessenden Darmfüllvorgang nicht zu behindern.

Wie die Fig. 3 zeigt, bietet die Keilscheibe 4 die Möglichkeit auch auf Füllrohre 9' kleineren Durchmessers Därme aufzuschieben. Die Variante veranschaulicht, daß der Motor 6' die Keilscheibe 4 auch unmittelbar antreiben kann. Bei Verzicht auf einen Träger könnte diese Ausführung auch als Handgerät Verwendung finden.

Die verschiebbare Lagerung der Keilscheibe 4 auf der Antriebswelle 15 zeigt die Fig. 4. In die Welle 15 ist ein Keil 17 eingesetzt, der in eine in der Keilscheibe 4 vorgesehene Längsnut 18 eingreift. Zur Abdichtung und Zentrierung sind zwei im Querschnitt V-förmige Dichtungsringe 19, 20 aus elastischem Material vorgesehen, wobei sich der Dichtungsring 19 an einem Absatz 21 der Antriebswelle 15 und der Dichtungsring 20 an einer am Ende der Antriebswelle 15 angebrachten Hutmutter 22 abstützt. Um die Aufgabe der Zentrierung zu erfüllen, empfiehlt es sich die Dichtungsringe 19, 20 mit leichter Vorspannung einzubauen. Die Dichtungsringe verhindern, daß an dem Darm haftende Flüssigkeit und feste Teilchen zwischen Antriebswelle und Keilscheibe eindringen und die Verschiebbarkeit der Keilscheibe beeinträchtigen.

Im Rahmen der Erfindung besteht auch die Möglichkeit den Träger 3 mit einem Gelenk auszustatten, um die Keilscheibe 4 aus der Arbeitsstellung heraus von dem Füllrohr 9 wegschwenken zu können.

- 6 -

Patentansprüche:
-----------------

1. Vorrichtung zum Aufziehen von Därmen auf Füllrohre oder Mundstücke von Wurstfüllmaschinen, gekennzeichnet durch eine mit dem Füllrohr (9, 9') der Wurstfüllmaschine (1) im Eingriff stehende bzw. bringbare, auf den Innenflanken (11, 12) mit einer flexiblen Schicht (10), z.B. aus Moosgummi oder Schaumkunststoff belegte und durch einen Motor (6, 6') angetriebene Keilscheibe (4), deren lichte Weiten und Neigungswinkel so dimensioniert sind, daß der Außenumfang des Füllrohres (9, 9') in der Peripherie der horizontalen Mittelebene (13) bzw. im unmittelbar darunter liegenden Bereich die Innenflanken (11, 12) der Keilscheibe (4) berührt.

2. Vorrichtung nach Anspruch 1, dadurch gekennzeichnet, daß die lichten Weiten und Neigungswinkel der Keilscheibe (4) so dimensioniert sind, daß sie mit Füllrohren (9, 9') unterschiedlichen Durchmessers zusammenwirken kann.

3. Vorrichtung nach den Ansprüchen 1 und 2, dadurch gekennzeichnet, daß die Keilscheibe (4) auf der Antriebswelle (15) verschiebbar gelagert und gegenüber dieser mittels im Querschnitt V-förmiger Dichtungsringe (19, 20) abgedichtet und zentriert ist.

4. Vorrichtung nach den Ansprüchen 1 und 2, dadurch gekennzeich-

net, daß sie an der Wurstfüllmaschine (1) trennbar angeordnet ist.

5. Vorrichtung nach den Ansprüchen 1 und 2, gekennzeichnet durch
ihre Ausbildung als Handgerät mit unmittelbar auf die Antriebswelle (15) einwirkendem Motor (6').

6. Vorrichtung nach den Ansprüchen 1 und 2, dadurch gekennzeichnet, daß sie ein Element der Wurstfüllmaschine (1)
ist und von dieser angetrieben wird.

*Fig:1*

*Fig:2*

*Fig:3*

*Fig:4*

Europäisches Patentamt

**EUROPÄISCHER RECHERCHENBERICHT**

| | **EINSCHLÄGIGE DOKUMENTE** | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | A 22 C 13/02 |
| X | DE - A - 2 123 732 (SCHNELL)<br><br> * Seite 8, Zeilen 2-18; Patentanspruch 1; Figuren * | 1,4,5 | |
| X | US - A - 2 604 657 (TIPPER)<br><br> * Spalte 1, Zeile 48 - Spalte 3, Zeile 12 * | 1,2 | |
| X | US - A - 577 586 (SCHONLAND)<br><br> * Zusammenfassung * | 1 | RECHERCHIERTE SACHGEBIETE (Int. Cl. ³)<br><br>A 22 C |
| X | US - A - 1 492 697 (NEUBERTH)<br><br> * Seite 1, Zeilen 9-14, 69-86 * | 1 | |
| | US - A - 2 498 948 (FLOMEN)<br><br> * Spalte 3, Zeilen 26-70; Spalte 4, Zeilen 7-32 * | 1 | |
| | US - A - 1 761 189 (BRENNAN)<br><br> * Seite 2, Zeilen 24-37 * | 3 | |
| | US - A - 3 049 749 (MAYER)<br><br> * Spalte 4, Zeilen 26-42; Patentansprüche 1-7 *<br><br>./. | 1,2 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| Der vorliegende Recherchenbericht wurde für alle Patentansprüche erstellt. | | |
|---|---|---|
| Recherchenort<br>Den Haag | Abschlußdatum der Recherche<br>13-10-1980 | Prüfer<br>DE LAMEILLEURE |

EPA form 1503.1 06.78

Europäisches
Patentamt

**EUROPÄISCHER RECHERCHENBERICHT**

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der Maßgeblichen Teile | betrifft Anspruch | | |
| A | US - A - 2 231 954 (SCHERUBEL) <br><br> * Seite 1, linke Spalte, Zeile 46 - rechte Spalte, Zeile 4 * <br><br> ------- | 1 | | |
| | | | | RECHERCHIERTE SACHGEBIETE (Int. Cl.³) |

EPA Form 1503.2  06.78